# EUROPÄISCHE PATENTSCHRIFT

(11) **EP 3 423 218 B1**
(45) Veröffentlichungstag und Bekanntmachung des Hinweises auf die Patenterteilung: **06.01.2021**
(21) Anmeldenummer: 17715413.5
(22) Anmeldetag: 22.03.2017
(51) Int. Cl.: B22F 3/105, B22F 5/04, B22F 7/06, B33Y 10/00, B23K 26/342, B23K 26/00, B23K 101/00, B23K 103/18

(54) **VERFAHREN ZUR MODULAREN ADDITIVEN HERSTELLUNG EINES BAUTEILS UND BAUTEIL**
METHOD FOR THE MODULAR ADDITIVE MANUFACTURING OF A COMPONENT AND A COMPONENT
PROCÉDÉ DE FABRICATION ADDITIVE D'UN COMPOSANT, ET COMPOSANT

(30) Priorität: 19.04.2016 DE 102016206547
(43) Veröffentlichungstag der Anmeldung: 09.01.2019
(73) Patentinhaber: Siemens Aktiengesellschaft, 80333 München (DE)
(72) Erfinder: BRUNHUBER, Christian, 91275 Auerbach (DE); HANEBUTH, Henning, 85652 Pliening OT Gelting (DE)
(86) Internationale Anmeldenummer: PCT/EP2017/056843
(87) Internationale Veröffentlichungsnummer: WO 2017/182221

(56) Entgegenhaltungen:
- EP-A2- 2 586 972
- DE-A1-102006 049 216
- US-A1- 2014 044 982
- US-A1- 2015 037 162
- US-A1- 2016 045 990
- US-A1- 2016 090 845

## Beschreibung

Die vorliegende Erfindung betrifft ein Verfahren zur additiven, insbesondere modularen Herstellung eines Bauteils oder Werkstücks sowie ein mit dem Verfahren hergestelltes bzw. herstellbares Bauteil.

Das Bauteil ist vorzugsweise für den Einsatz in einer Strömungsmaschine, vorzugsweise einer Gasturbine vorgesehen. Besonders bevorzugt ist das Bauteil eine Turbinenschaufel und/oder ein Schaufelblatt einer Turbinenschaufel.

Generative oder additive Herstellungsverfahren sind beispielsweise das Laserauftragschweißen (LMD) oder das selektive Laserschmelzen (SLM).

Ein Auftragschweiß-Verfahren ist beispielsweise bekannt aus EP 2 756 909 A1.

Ein Verfahren zum selektiven Laserschmelzen ist hingegen beispielsweise aus der EP 1 355 760 B1 bekannt.

Zur Herstellung eines Bauteiles aus einem Pulverbett heraus, beispielsweise mittels SLM, wird das Pulverbett beispielsweise mit einem Laserstrahl gemäß einer vorgegebenen Belichtungsgeometrie belichtet, wobei entsprechende Daten vorzugsweise aus einer 3D-CAD-Datei entnommen werden.

Additive Fertigungsverfahren im Bereich AM ("additive Manufacturing") haben sich als besonders vorteilhaft für komplexe oder kompliziert oder filigran designte Bauteile, beispielsweise Leichtbau-Strukturen erwiesen. Insbesondere ist die additive Herstellung vorteilhafterweise durch eine besonders kurze Kette von Prozessschritten charakterisiert, da ein Herstellungs- oder Fertigungsschritt des Bauteils unter Umständen direkt auf Basis einer CAD-Datei erfolgen kann.

Weiterhin ist die additive Herstellung besonders vorteilhaft für die Entwicklung bzw. Herstellung von Prototypen, welche Beispielsweise aus Kostengründen mittels konventioneller, subtraktiver, spanender oder Guss-Verfahren nicht oder nicht effizient hergestellt werden können.

Ein Problem, welches bei der additiven Herstellung jedoch oftmals auftritt ist, dass sich, insbesondere bei pulverbettbasierten Prozessen wie dem selektiven Laserschmelzen, das Design des Bauteils aus der entsprechenden CAD-Datei nicht ohne weiteres reproduzieren bzw. fertigungstechnisch umsetzen lässt. Diese Beschränkungen können sowohl die Geometrie als auch das Material des Bauteils betreffen; zum Beispiel erfordern kreisrunde und/oder horizontal innenliegende Hohlräume oder Kanäle beim SLM-Verfahren Stützstrukturen, welche mit aufgebaut werden müssen, jedoch im originär vorgesehenen Design nicht vorhanden und auch nicht erwünscht sind. Ein weiteres Problem betrifft die Ausbildung von besonders feinen Oberflächenstrukturen oder labyrinthartigen Merkmalen oder Strukturen, welche in dem hergestellten Bauteil oder herzustellenden Design nachgearbeitet und/oder von überschüssigem Pulver befreit werden müssen. Dies kann jedoch insbesondere aufgrund der Größe der Hohlräume kompliziert oder unmöglich sein.

Selbst wenn beispielsweise bei der SLM-Herstellung von Bauteilen oder Komponenten die Bauteilorientierung, beispielsweise relativ zur Aufbaurichtung, so erfolgt, dass die genannten fertigungsbedingten Nachteile oder Artefakte, beispielsweise durch Stützstrukturen, minimiert werden, so sind sie nie ganz zu vermeiden.

Weitere Verfahren sind in der US 2014/0044982 A1 und in der US 2016/0090845 A1 offenbart. Insbesondere offenbart US 2016/0090845 A1 ein Verfahren, wobei Teilabschnitte zu einem Verbund fixiert werden, um ein Bauteil herzustellen.

Es ist daher eine Aufgabe der vorliegenden Erfindung, Mittel anzugeben, mit denen die genannten Probleme gelöst werden können. Insbesondere wird ein verbessertes Verfahren und/oder ein verbessertes Bauteil vorgestellt, welches vorteilhaft besonders feinaufgelöste Innenstrukturen umfassen kann und dennoch besonders zeit- und/oder ressourceneffizient hergestellt werden kann.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zur additiven Herstellung eines Bauteils, vorzugsweise einer Turbinenschaufel oder eines Schaufelblatts der Turbinenschaufel, umfassend das additive Aufbauen einer Mehrzahl von Teilabschnitten für das Bauteil mit einem pulverbettbasierten Verfahren. Das pulverbettbasierte Verfahren kann beispielsweise selektives Laserschmelzen (SLM), selektives Lasersintern (SLS) oder Elektronenstrahlschmelzen (EBM) sein.

Das additive Aufbauen bzw. Herstellen kann modular erfolgen.

Die beschriebenen Teilabschnitte können mittels des pulverbettbasierten Verfahrens seriell oder parallel aufgebaut werden.

Das Verfahren umfasst weiterhin das Anordnen, beispielsweise das Verbinden, Fügen oder Zusammenfügen, der Teilabschnitte zu einem Verbund, insbesondere zu einem lösbaren Verbund oder Zusammenschluss durch lösbares Fixieren oder Aneinanderlegen der Teilabschnitte. Die Teilabschnitte werden in diesem Schritt vorzugsweise (noch) nicht stoffschlüssig miteinander verbunden.

Das Verfahren umfasst weiterhin das additive Fertigstellen des Bauteils, wobei entlang einer Umfangsrichtung, zumindest teilweise um den Verbund der Teilabschnitte (herum) mit einem Auftragschweiß-Verfahren, vorzugsweise Laserauftragschweißen (LMD), Material derart abgeschieden wird, dass die Teilabschnitte stoffschlüssig oder materialschlüssig miteinander verbunden werden.

Durch das stoffschlüssige Verbinden kann das Bauteil vorteilhafterweise seine endgültige Formstabilität erhalten. Das Material, welches mittels des Auftragschweiß-Verfahrens abgeschieden wird, kann ein stabilisierendes Gerüst bilden.

Der Ausdruck "Fertigstellen" bezieht sich vorliegend vorzugsweise auf den additiven Aufbau, wobei eine mechanische Nachbearbeitung der Oberfläche des Bauteils für die fertige Herstellung vorzugsweise noch nicht umfasst ist. Alternativ oder zusätzlich kann "Fertigstellen" bedeuten, dass - für seine Stabilisierung - zumindest ein Umriss oder eine Kontur des Bauteils oder für das Bauteil definiert wird.

Das Auftragschweiß-Verfahren kann ein Laserpulverauftragschweiß-Verfahren sein.

Durch das beschriebene Verfahren können vorteilhafterweise die oben genannten Einschränkungen auf einfache Weise umgegangen werden, welche mit der pulverbettbasierten Herstellung von Komponenten oder Bauteilen, beispielsweise für Turbinenschaufeln üblicherweise einhergehen. Dies gilt insbesondere für Bauteile mit einer besonders komplizierten oder kompliziert strukturierten oder zu strukturierenden inneren Geometrie, wie beispielsweise für Turbinenschaufeln mit einer Stütz- und/oder Kühlkanalstruktur, welche die Leichtbauweise bzw. deren Kühlung im Betrieb unterstützen soll. Das gesamte Bauteil kann somit, wie in der additiven Fertigung üblich, beispielsweise in einem CAD-Datenmodell in einzelne Teilbereiche oder Teilabschnitte unterteilt werden. Anschließend kann jeder einzelne dieser Teilabschnitte, beispielsweise entweder parallel oder seriell, mittels selektivem Laserschmelzen oder einem anderen pulverbettbasierten Verfahren, wie beispielsweise Elektronenstrahlschmelzen, aufgebaut werden.

Die genannte Unterteilung erfolgt dabei zweckmäßigerweise so, dass bei den einzelnen Modulen oder Teilabschnitten möglichst wenig Hinterschnitte oder Hohlräume auftreten, so dass auf Stützstrukturen für das pulverbettbasierte Verfahren mit Vorteil im Wesentlichen verzichtet werden kann.

Auch wird somit das Problem umgangen, dass filigrane Hohlräume oder Innenstrukturen - wie beispielsweise bei der monolithischen additiven Herstellung einer kompletten Turbinenschaufel aus dem Pulverbett - innere Flächen nicht mehr mechanisch oder anderweitig nachbearbeitet werden können, sowie, dass, beispielsweise bei labyrinthartigen Geometrien, Überschusspulver nur sehr schwer oder gar nicht aus dem Innenraum entfernt werden kann. Stattdessen können mit Vorteil diejenigen Flächen der einzelnen Teilabschnitte erstens problemlos nachbearbeitet werden, da sie zunächst, das heißt vor dem additiven Fertigstellen, frei zugänglich sind. Zweitens können Sie ebenfalls vollständig und auf einfache Weise von Pulver befreit werden (vgl. oben).

Durch die genannte freie Zugänglichkeit der Innenflächen, der einzelnen Teilabschnitte wird insbesondere eine mechanische Nachbearbeitung und/oder Oberflächenbehandlung an quasi beliebigen Teilflächen des Bauteils ermöglicht, was wiederum - beispielsweise im Fall von Kühlkanälen im Inneren der Turbinenschaufel - eine deutlich höhere Kühleffizienz für das Bauteil bedeuten kann. Folglich werden auch höhere Betriebstemperaturen der Turbine möglich, wodurch weiterhin die Effizienz der Energiewandlung in Strömungsmaschinen entscheidend verbessert werden kann.

Selbst wenn Stützstrukturen noch für den pulverbettbasierten Aufbau der einzelnen Teilabschnitte vorgesehen werden, können auch diese nachträglich, d.h. vor dem Fertigstellen des Bauteils, durch die freie Zugänglichkeit entfernt werden (vgl. unten) .

Als weiterer Vorteil des beschriebenen Verfahrens, kann die Abscheidung von Material, zumindest teilweise entlang der Umfangsrichtung mittels Auftragschweißen, d.h. besonders schnell oder zeiteffizient erfolgen, wodurch Kostenvorteile gegenüber einer Fertigung des Bauteils ausschließlich mittels pulverbettbasierter Verfahren ausgenutzt werden können.

Insbesondere sind Geometrien oder Designs mit dem vorliegenden Verfahren herstellbar, welche mittels Gusstechnik aufwendig und/oder insbesondere sehr teuer sind, beispielsweise komplizierte verschachtelte Hohlräume, beispielsweise mit einer Vielzahl von Innenwandlungen oder einer Vielfach-Wandung (englisch: "multi-walls"), welche die Anwendung von mehreren Gusskernen für das Bauteil erfordern würden.

Die genannte Abscheidung von Material kann beispielsweise zumindest teilweise umfangsseitig um den Verbund herum erfolgen. Dabei ist es unter Umständen erforderlich, das zusätzlich durch Auftragschweißen abgeschiedene Material für die endgültige Abmessung des Bauteils zu berücksichtigen, beispielsweise, indem die Schicht- oder Randdicke des (Schweiß-) Materials von vornherein einkalkuliert wird, oder indem beispielsweise schon bei der geometrischen Auslegung der Teilabschnitte, Ausnehmungen vorgesehen werden.

Durch die beschriebene Kombination von additiven pulverbettbasierten Herstellungsverfahren, insbesondere für die einzelnen Teilabschnitte des Bauteils, zusammen mit additiven Auftragschweiß-Verfahren, insbesondere Laserpulverauftragschweißen zum Fertigstellen des Bauteils, wird weiterhin in vorteilhafterweise die Kompatibilität der genannten Verfahrensarten ausgenutzt. Insbesondere können für das Bauteil sowohl für den Teilaufbau als auch für das Fertigstellen mit dem beschriebenen Verfahren die gleichen Werkstoffe oder Materialien verarbeitet werden, was insbesondere für Hochleistungsbauteile oder -materialien vorteilhaft oder sogar notwendig ist.

In einer Ausgestaltung wird der Verbund der Teilabschnitte vollständig mit dem Material ummantelt. Diese Ausgestaltung ist insbesondere vorteilhaft für die Stabilität des Bauteils, da ein komplettes formstabilisierendes Gerüst mittels der Auftragschweiß-Technik bereitgestellt werden kann.

Erfindungsgemäß werden alle Teilabschnitte oder zumindest eine Mehrzahl der Teilabschnitte nach dem Anordnen zu dem Verbund oder während des Anordnens zu dem Verbund gegenseitig fixiert. Die genannte Fixierung erfolgt zweckmäßigerweise jedenfalls vor dem additiven Fertigstellen. Die Fixierung ist insbesondere vorteilhaft, um eine gewisse Fertigungsgenauigkeit für das gesamte Bauteil zu bewahren. Beispielsweise kann die Fixierung notwendig sein, um einen Verzug oder ein gegenseitiges Lösen der zu dem Verbund angeordneten Teilabschnitte während des Fertigstellens zu verhindern.

Erfindungsgemäß erfolgt die genannte Fixierung formschlüssig.

Der Ausdruck "gegenseitig" kann sich vorliegend auf alle oder lediglich auf eine Mehrzahl der Teilabschnitte beziehen, dahingehend, dass lediglich zwei oder mehr der Teilabschnitte aneinander fixiert werden.

Erfindungsgemäß werden alle Teilabschnitte oder zumindest eine Mehrzahl der Teilabschnitte während des additiven Aufbauens mit komplementären Verbindungsmitteln versehen oder mit komplementären Verbindungsmitteln aufgebaut, derart dass die entsprechenden Teilabschnitte anschließend formschlüssig miteinander verbunden werden können.

In einer Ausgestaltung sind die komplementären Verbindungsmittel ausgebildet, über eine Feder-Nut-Verbindung der entsprechenden Teilabschnitte zusammenzuwirken. Diese Ausgestaltung ermöglicht besonders zweckmäßig eine formschlüssige Fixierung oder Verbindung, beispielsweise entlang zumindest einer Bewegungsachse zweier Teilabschnitte relativ zueinander.

In einer Ausgestaltung bildet mindestens einer der Teilabschnitte eine Innenwand, Innenwandung oder Innenfläche des Bauteils. Diese Ausgestaltung ist insbesondere zweckmäßig, da - mittels der beschriebenen pulverbettbasierten Verfahren - Innenflächen mit fast beliebig komplizierter Geometrie einfach aufgebaut werden können.

Wenn vorliegend das Bauteil bezeichnet ist, kann insbesondere das herzustellende und/oder das bereits her- oder fertiggestellte Bauteil gemeint sein.

In einer Ausgestaltung bilden alle oder eine Mehrzahl von Teilabschnitten eine Vielfach-Wandung des Bauteils. Insbesondere kann eine Vielfach-Wandung eine Außenwand und eine Mehrzahl von innen liegenden Wänden oder Wandlungen umfassen. Dieses Beispiel ermöglicht mit Vorteil eine Ausgestaltung des Bauteils mit einer komplizierten aber besonders effektiven Kühlkanalstruktur.

Erfindungsgemäß werden alle oder eine Mehrzahl von Teilabschnitten derart aufgebaut, dass sie einen Hohlraum des Bauteils oder für das herzustellende Bauteil definieren, insbesondere umfassend mindestens einen Kühlkanal. Alternativ kann das Bauteil derart mit dem Hohlraum versehen werden, vorzugsweise während des additiven Aufbauens, dass der Hohlraum eine Mehrzahl von Kühlkanälen oder eine beliebig komplizierte Kühlstruktur umfasst.

In einer Ausgestaltung werden alle oder eine Mehrzahl der Teilabschnitte derart aufgebaut, dass sie eine Stützstruktur des Bauteils umfassen oder bilden.

In einer Ausgestaltung wird zumindest einer der Teilabschnitte nach dem additiven Aufbauen, beispielsweise mechanisch, nachbearbeitet. Die genannte Nachbearbeitung kann auf eine, später im Bauteil innenliegende Fläche angewendet werden, womit die oben genannten erfinderischen Vorteile ausgenutzt werden können.

In einer Ausgestaltung werden, vorzugsweise alle Teilabschnitte auf einem vorgefertigten Werkstück angeordnet. Das fertiggestellte Bauteil umfasst dann vorzugsweise ebenfalls das genannte vorgefertigten Werkstück.

In einer Ausgestaltung ist das Bauteil eine Turbinenschaufel, umfassend einen Schaufelfußabschnitt und einen Schaufelblattabschnitt, insbesondere eine Laufschaufel für eine Gasturbine.

In einer Ausgestaltung ist das Bauteil ein Schaufelblatt oder ein Schaufelblattabschnitt für eine Turbinenschaufel, insbesondere eine Laufschaufel für eine Gasturbine.

Ein weiterer Aspekt der vorliegenden Erfindung betrifft ein Bauteil, welches mit dem beschriebenen Verfahren hergestellt oder herstellbar ist, weiterhin umfassend einen Hohlraum, insbesondere mit mindestens einem Kühlkanal und/oder einer Stützstruktur. Das Bauteil umfasst, entsprechend dem mittels Laserauftragschweißen abgeschiedenen Material beispielsweise Schweißspuren. Äußerlich können bspw. erkennbare Schweißraupen, bspw. nach dem fertigen Aufbau, mit dem beschriebenen Verfahren nachträglich bearbeitet oder beseitigt werden.

Ausgestaltungen, Merkmale und/oder Vorteile, die sich vorliegend auf das Verfahren beziehen, können ferner das Bauteil betreffen oder umgekehrt.

Weitere Einzelheiten der Erfindung werden nachfolgend anhand der Figuren beschrieben.
- Figur 1: zeigt eine schematische perspektivische Ansicht von Teilabschnitten, welche erfindungsgemäß hergestellt sind.
- Figur 2: zeigt eine schematische perspektivische Ansicht der Teilabschnitte aus Figur 1, welche entsprechend dem erfindungsgemäßen Verfahren, beispielsweise zu einem Verbund, angeordnet sind bzw. werden.
- Figur 3: zeigt eine schematische Aufsicht auf zumindest einen Teil eines Bauteils, welches erfindungsgemäß hergestellt ist.
- Figur 4: zeigt eine schematische Seitenansicht eines Bauteils, welches erfindungsgemäß hergestellt wird.
- Figur 5: zeigt eine schematische perspektivische Ansicht eines erfindungsgemäß hergestellten Bauteils.
- Figur 6: zeigt eine schematische Aufsicht oder Skizze von Teilabschnitten, welche gemäß einer alternativen Ausgestaltung erfindungsgemäß hergestellt sind bzw. werden.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

Anhand der Figuren wird vorliegend ein erfindungsgemäßes additives Herstellungsverfahren für ein Bauteil sowie ein entsprechendes Bauteil beschrieben.

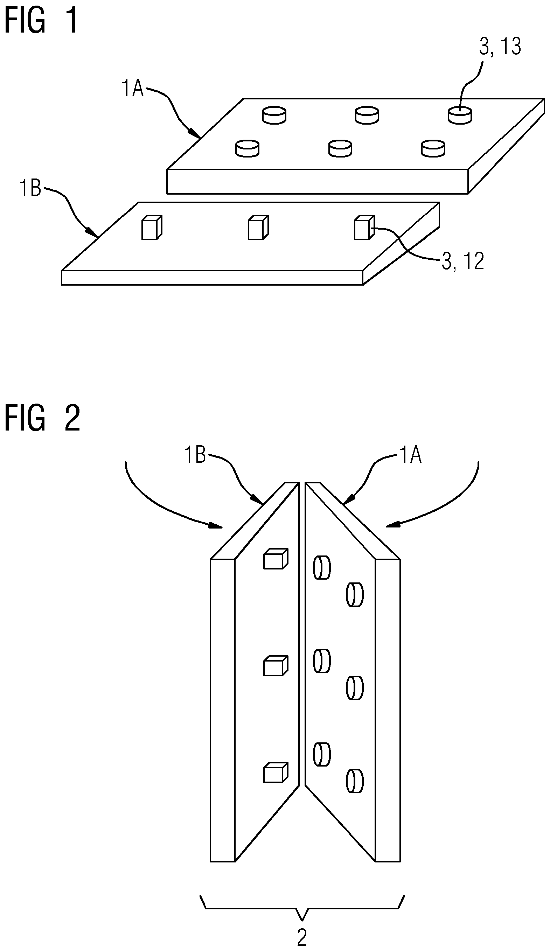

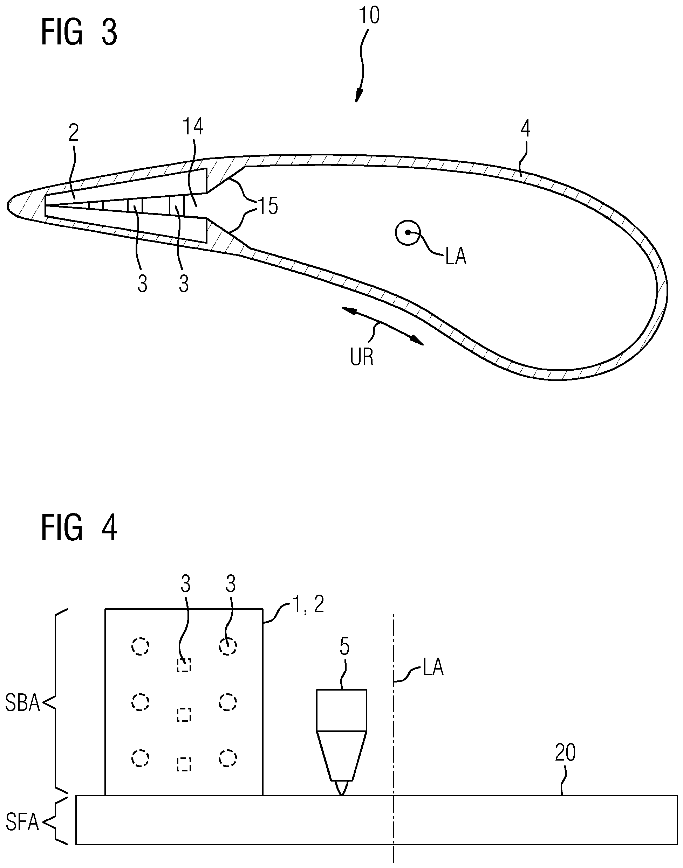

Figur 1 zeigt eine schematische perspektivische Ansicht von zwei Teilabschnitten 1 für ein additiv herzustellendes Bauteil 10(vergleiche Figuren 3 bis 5). Das Bauteil ist vorzugsweise für den Einsatz in einer Strömungsmaschine, vorzugsweise einer Gasturbine vorgesehen. Besonders bevorzugt ist das Bauteil eine Turbinenschaufel und/oder ein Schaufelblatt, oder ein Schaufelblattabschnitt einer Turbinenschaufel. Bei der Schaufel kann es sich um eine Leit- als auch um eine Laufschaufel handeln.

Insbesondere sind ein Teilabschnitt 1A und ein Teilabschnitt 1B als Teilabschnitte 1 für das Bauteil 10 dargestellt. Die Teilabschnitte 1A, 1B können Module für das genannte Bauteil sein. Die Teilabschnitte 1A, 1B wurden mit einem pulverbettbasierten additiven Herstellungsverfahren aufgebaut. Dies kann sowohl parallel als auch seriell erfolgen. Beispielweise handelt es sich bei dem pulverbettbasierten Verfahren um selektives Laserschmelzen (SLM) oder Elektronenstrahlschmelzen (EBM). Diese Verfahren sind für die Herstellung von Turbinenkomponenten aus Hochleistungsmaterialien, wie beispielsweise ausscheidungsgehärteten oder -härtbaren Superlegierungen besonders zweckmäßig.

Die Teilabschnitte 1A, 1B umfassen jeweils Verbindungsmittel 3. Der Teilabschnitt 1A umfasst als Verbindungsmittel 3 beispielsweise eine Mehrzahl von Nuten 13. Der Teilabschnitt 1B umfasst als Verbindungsmittel 3 beispielsweise eine Mehrzahl von Federn oder Nasen 12, welche komplementär zu oder entsprechend der beschriebenen Nuten ausgebildet sind, derart, dass die Teilabschnitte 1A, 1B insbesondere vor ihrer endgültigen stoffschlüssigen Verbindung, zu einem Verbund 2 (vergleiche Figur 2) angeordnet und/oder vorfixiert werden können. Dabei können die Nasen 12, insbesondere zumindest teilweise in die vorzugweise entsprechend angeordneten Nuten 13 greifen.

Durch die beschriebenen Verbindungsmittel 3 werden die Teilabschnitte 1A, 1B zumindest entlang einer, vorzugsweise jedoch zwei linear unabhängigen Bewegungsachsen oder - richtungen der Teilabschnitte 1A, 1B relativ zueinander derart fixiert, dass eine entsprechende Bewegung verhindert wird.

Durch die beschriebene Feder-Nut-Verbindung (vergleiche Nasen 12 und Nuten 13) kann ein Formschluss hergestellt werden.

Die beschriebenen mechanische Verbindungsmittel zur Fixierung der Teilabschnitte 1A, 1B relativ zueinander werden gemäß der Erfindung vorzugsweise während der additiven Herstellung aufgebaut oder währenddessen mit den entsprechenden Grundkörpern der Teilabschnitte versehen.

Die Seitenflächen der gezeigten Teilabschnitte, welche die Verbindungsmittel 3 aufweisen, sind vorzugsweise im späteren Bauteil Innenflächen und können eine vorbestimmte, komplexe Struktur aufweisen.

Direkt nach dem additiven Aufbau der Teilabschnitte 1A, 1B können die Teilabschnitte erfindungsgemäß, beispielsweise mechanisch oder anderweitig nachbehandelt werden, vorzugsweise derart dass die genannten Innenflächen auf ihren späteren Einsatz abgestimmt werden. Im Falle von Kühlkanalstrukturen kann die Nacharbeit beispielsweise derart erfolgen, dass das Bauteil im Betrieb später möglichst effizient von innen gekühlt werden kann.

Weiterhin sind in den Figuren 1 und 2 der Einfachheit halber keine Stützstrukturen gezeigt, welche häufig bei der pulverbettbasierten additiven Herstellung zum "Abstützen" von Hohlräumen oder Hinterschnitten eingesetzt oder aufgebaut werden. Der beschriebene modulare oder teilweise Aufbau der Teilabschnitte kann mit Vorteil einen (maßgeblichen) Einsatz von Stützstrukturen überflüssig machen.

In Figur 1 sind die beschriebenen Teilabschnitte 1A, 1B, beispielsweise liegend dargestellt. Gemäß dieser Orientierung können die Teilabschnitte auch in dem beschriebenen pulverbettbasierten Verfahren auf einer Bauplattform, d.h. liegend, aufgebaut werden, was insbesondere den Vorteil einer zeit-und pulvereffizienten Herstellung entspricht. Beim liegenden Aufbau, wobei beispielsweise eine Längsachse oder die Hauptausdehnung des Bauteils senkrecht zur Aufbaurichtung angeordnet ist, können erforderliche Stützstrukturen (vergleiche oben) auf der Außenseite des jeweiligen Teilabschnitts angeordnet oder vorgesehen werden, sodass sie anschließend einfach und problemlos entfernt werden können.

Alternativ dazu können die Teilabschnitte 1A, 1B beispielsweise stehend aus dem Pulverbett heraus aufgebaut, beziehungsweise hergestellt werden. Beim stehenden Aufbau, bei dem beispielsweise eine Längsachse des entsprechenden Teilabschnitts entlang oder parallel zu einer Aufbaurichtung des pulverbettbasierten Verfahrens ausgerichtet ist, kann vorzugsweise vollständig oder fast komplett auf Stützstrukturen verzichtet werden.

Figur 2 deutet insbesondere den Verbund 2 bzw. den Vorgang (vergleiche Pfeile) des Anordnens der Teilabschnitte zu dem Verbund 2 an. Der Verbund 2 umfasst die in Figur 1 beschriebenen Teilabschnitte 1A, 1B.

Der Verbund 2 ist ebenfalls als Teil eines Bauteils 10 in Figur 3 dargestellt, wobei jedoch die Verbindungsmittel 3 der Teilabschnitte zumindest teilweise ineinander greifen oder komplementär zusammenwirken.

Figur 3 zeigt eine schematische Aufsicht auf einen Teil eines Bauteils 10. Bei dem Bauteil handelt es sich beispielhaft um ein Bauteil für eine Strömungsmaschine, beispielsweise um eine Turbinenschaufel.

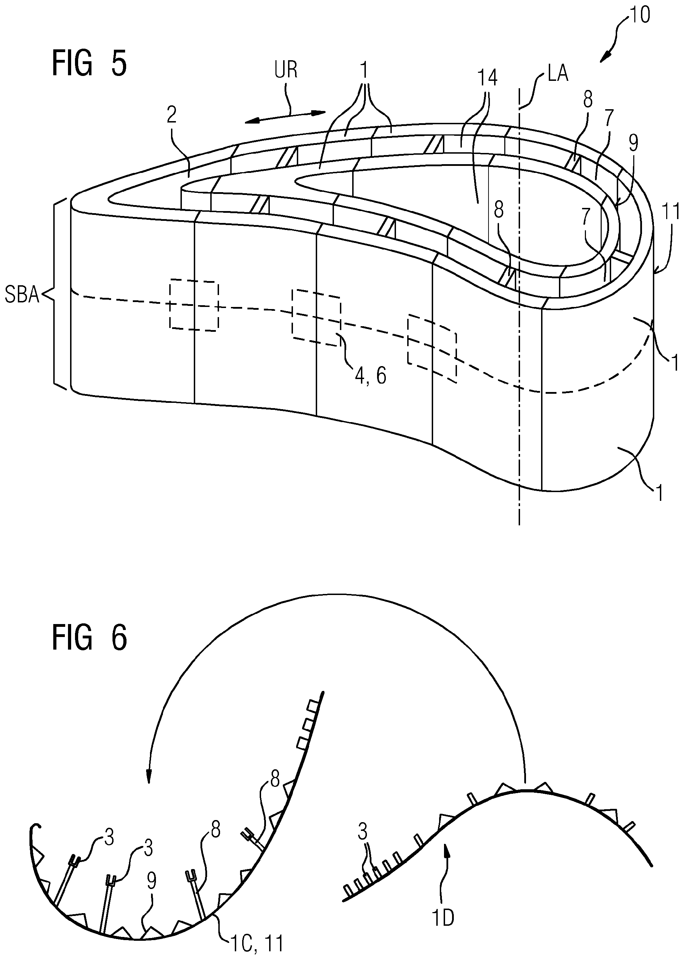

Vorzugsweise bezeichnet das Bauteil 10 eine Turbinenschaufel für eine Gasturbine mit einer subtilen und/oder komplizierten Innenstruktur, beispielsweise einer Stützstruktur oder, vorzugsweise einer Kühlkanal-Struktur. Obwohl diese Struktur in den vorliegenden Figuren 1 bis 4 nicht explizit dargestellt ist, können die Teilabschnitte eine entsprechend beliebig gestaltete Geometrie umfassen, welche beispielsweise einen Hohlraum (vergleiche Bezugszeichen 14 in den Figuren 3 und 5) definiert.

In Figur 3 ist zu erkennen, dass die Verbindungsmittel 3 (insbesondere die Nasen 12) im fertigen Bauteil in dem Hohlraum 14 desselben angeordnet sind oder sich durch diesen erstrecken und demnach beispielsweise eine stützende Wirkung (Stützstruktur) haben können. Diese Merkmale werden zweckmäßigerweise bereits bei der ursprünglichen Konzeption oder Auslegung der Teilabschnitte, bspw. mittels CAD (eglisch: "computer-aided-design") berücksichtigt.

In der Figur 3 ist das Bauteil 10 ebenfalls als Turbinenschaufel dargestellt, wobei der (vorläufige) Verbund oder die Anordnung der Teilabschnitte 1A, 1B einen Querschnittsbereich der Turbinenschaufel in der Nähe der Abströmkante bilden. Gleichzeitig können die Zwischenräume der Verbindungsmittel 3 als Kühlkanäle fungieren.

Nach dem Anordnen der Teilabschnitte 1 umfasst das additive Herstellungsverfahren des Bauteils 10 das additive Fertigstellen, wobei entlang einer Umfangsrichtung UR (vergleiche den Doppelpfeil) um den Verbund 2 der Teilabschnitte, mit einem Auftragschweiß-Verfahren, beispielsweise einem Laserpulverauftragschweiß-Verfahren, ein Material 4 zumindest teilweise umfangsseitig abgeschieden wird, derart dass die Teilabschnitte stoff- oder materialschlüssig miteinander verbunden werden. Dies ist in der Darstellung der Figur 3 bereits durch das Material 4 vorweggenommen dargestellt. Mit anderen Worten bildet das Material 4 ein stabilisierendes Gerüst des oder für das Bauteil 10. Beispielhaft ist in Figur 3 insbesondere dargestellt, dass die Teilabschnitte 1A, 1B vollständig mit dem Material 4 ummantelt sind oder werden. Alternativ kann jedoch lediglich ein Teil des Umfangs des Verbundes 2 mit dem Material 4 beschichtet werden (vergleiche Figur 5).

Die genannte Umfangsrichtung UR beschreibt vorzugsweise eine oder mehrere Richtungen senkrecht zu einer Längsachse LA des Bauteils 10 oder eines Schaufelblatts desselben.

Die Umfangsrichtung UR beschreibt vorzugsweise weiterhin eine oder mehrere Richtungen, gemäß oder entlang derer der beschriebene Verbund mit dem Material 4 zumindest teilweise ummantelt wird.

Um den beschriebenen Verbund 2 bzw. die Teilabschnitte 1A, 1B - zusätzlich zu den beschriebenen Stoffschluss mit dem Material 4 - mechanisch zu stabilisieren, wird das Material 4 mittels Auftragschweißen vorzugweise derart abgeschieden, dass für das fertig hergestellte Bauteil Vorsprünge 15 aufgebaut werden, welche den Verbund 2 relativ zu dem Material 4 fixieren oder halten.

In Figur 4 ist das beschriebene Bauteil 10 (vgl. Figur 3) während seiner additiven Herstellung in einer Seitenansicht angedeutet, wobei der beschriebene Verbund 2 vorzugsweise vollständig entlang einer Längsachse LA des Bauteils mit dem Material 4 ummantelt wird. Beispielhaft ist ein Auftragschweiß-Werkzeug 5, vorzugsweise ein Werkzeug zum Laserpulverauftragschweißen, dargestellt, mit welchem die Bahnen für das Material 4 additiv aufgebracht werden.

Eine Aufbaurichtung für das Material 4 entspricht vorzugsweise der beschriebenen Längsachse LA oder einer Richtung parallel zu dieser.

Der weiter oben beschriebene Verbund kann insbesondere einen Schaufelblattabschnitt (SBA) der Turbinenschaufel darstellen oder sich über diesen erstrecken. Ein entsprechender Schaufelfußabschnitt (SFA) ist unterhalb des Verbundes 2 dargestellt. Dieser kann ebenfalls zu dem Bauteil 10 gehören. Alternativ kann das Bauteil 10 lediglich den Schaufelblattabschnitt SBA bezeichnen.

Der Schaufelfußabschnitt SFA kann beispielsweise ein, insbesondere vorgefertigtes Werkstück sein.

Figur 5 zeigt eine perspektivische schematische Ansicht des erfindungsgemäßen Bauteils 10 in einer alternativen Ausgestaltung. Gemäß dieser Ausgestaltung hat das Bauteil 10 eine komplexe Innengeometrie. Das Bauteil ist gemäß dieser Ausgestaltung ebenfalls eine von innen kühlbare Turbinenschaufel, vorzugsweise eine Laufschaufel für eine Gasturbine. Insbesondere umfasst das Bauteil 10 zur Definition von entsprechenden Kühlkanälen eine Mehrfach-Wandung.

Insbesondere umfasst das Bauteil 10 eine Außenwand oder äußere Wandung 11, welche aus einer Mehrzahl von Teilabschnitten 1 zusammengesetzt ist (vergleiche gestrichelte Linien, welche die Grenzen der einzelnen Teilabschnitte 1 andeuten). Die Teilabschnitte der Außenwand 11 sind vorzugsweise umfangsseitig oder entlang der Umfangsrichtung UR (nebeneinander) angeordnet.

Das Bauteil 10 umfasst weiterhin eine Innenwand oder innere Wandung 9. Ebenso wie die Außenwand 11 ist die Innenwand aus einzelnen Teilabschnitten 1 zusammengesetzt.

In die Außenwand 11 und die Innenwand 9 können beispielsweise eine Vielfach-Wand oder Vielfach-Wandung des oder für das Bauteils 10 darstellen.

Die Innenwand 9 und/oder die Außenwand 11 definiert weiterhin einen Hohlraum 14.

Das Bauteil umfasst weiterhin eine Stützstruktur 8. Die Stützstruktur 8 verbindet an mehreren Stellen die Außenwand 11 mit der Innenwand 9, vorzugsweise derart, dass eine besonders zweckmäßige mechanische Stabilisierung oder Stützung der Struktur des Bauteils bewirkt wird. Obwohl dies nicht explizit dargestellt ist, kann die Innenwand 9 in sich ebenfalls eine entsprechende Stützstruktur 8 oder entsprechende Stützstrukturelemente zur Stützung gegenüberliegender Wandbereiche der Innenwand 9 umfassen.

Die Teilabschnitte 1 werden - wie oben beschrieben - zumindest teilweise mittels mechanischer, komplementärer Verbindungsmittel zu einem Verbund miteinander verbunden und/oder gegenseitig fixiert werden.

Dabei kann es ausreichend sein, dass nicht alle, sondern vorzugsweise lediglich eine Mehrzahl von oder einige der Teilabschnitte 1 zusammen oder gegenseitig fixiert werden. Insbesondere kann die Vor-Fixierung oder Verbindung von einzelnen Paaren von Teilabschnitten in dem Gesamtverbund, beispielsweise aller Teilabschnitte, eine ausreichende Stabilisierung des gesamten Verbundes 2 bewirken, so dass das Bauteil 10 im nächsten Verfahrensschritt, wie beschrieben fertig hergestellt oder aufgebaut werden kann.

Die genannte Abscheidung von dem Material 4 erfolgt zumindest teilweise umfangsseitig um den Verbund 2 herum. Dabei ist es normalerweise erforderlich, das abgeschiedene Material 4 für die endgültige Abmessung des Bauteils zu berücksichtigen, beispielsweise, in dem der (umfangsseitige) Raum der Ummantelung oder der Kontur des Materials 4 von vornherein einkalkuliert wird.

Insbesondere kann die Darstellung der Figur 5 den Verbund 2 sämtlicher Teilabschnitte 1 darstellen. Dieser Verbund 2 kann vollständig oder lediglich teilweise mit dem Material 4 ummantelt werden.

Es ist erfindungsgemäß auch vorgesehen und zweckmäßig, das Material 4 beispielsweise lediglich an die "Stöße" der Teilbereiche 1 des Verbundes 2 übergreifenden Stellen abzuscheiden. Dies ist beispielhaft mittels der gestrichelten Rechtecke an Verbindungsstellen von jeweils vier Teilbereichen angedeutet. Um das Material lediglich an den Stößen für die Geometrie des gesamten Bauteils 10 zu berücksichtigen, können die Teilbereiche beispielsweise mit entsprechenden Ausnehmungen (nicht explizit lediglich gekennzeichnet) an den Stellen versehen werden, wo Material 4 abgeschieden werden soll. Insbesondere können die Teilbereiche 1 entsprechend während der additiven Herstellung über eine CAD-Datei mit den Ausnehmungen versehen werden. Durch die Ausnehmungen kann das Bauteil 10 trotz der partiellen Abscheidung von (Schweiß-)Material 4, beispielsweise mit einer ebenen Oberfläche versehen werden.

Alternativ zu den vorliegenden Darstellungen, kann das beschriebene Verfahren und/oder das beschriebene Bauteil eine Leitschaufel für eine Strömungsmaschine betreffen. Demgemäß kann, beispielsweise mittels Auftragschweißen, ähnlich zu dem in Figur 4 gezeigten Schaufelfußabschnitt SFA, für das Bauteil 10, ein Deckabschnitt oder Deckband (nicht explizit gekennzeichnet) additiv hergestellt oder aufgebaut werden.

Figur 6 zeigt eine schematische Aufsicht von Teilabschnitten 1, gemäß einer alternativen Ausgestaltung des Verfahrens und/oder des Bauteils der vorliegenden Erfindung. Das Bauteil 10 ist gemäß dieser Ausgestaltung ebenfalls vorzugsweise eine Turbinenschaufel, wobei jedoch lediglich Teilaspekte der Herstellung bzw. des Aufbaus beschrieben sind.

Insbesondere ist im linken Teil vereinfacht ein Teilabschnitt 1C gezeigt. Eine ebene konvexe oder äußere Oberfläche des Teilabschnitts 1C kann beispielsweise eine Druckseite der Turbinenschaufel nachbilden, obwohl das (Ummantelungs-) Material 4 (nicht dargestellt) den endgültigen Umfang definieren kann. Eine konkave oder innenliegende Fläche oder Wand weist beispielsweise im Gegensatz zu den Darstellungen der Figuren 1 und 2 eine vordefinierte Struktur auf, beispielsweise eine Kühlstruktur, welche Kühlkanäle (nicht explizit gekennzeichnet) im fertigen Bauteil 10 definiert. Diese Struktur (vorliegend nicht weiter gekennzeichnet) ist durch kleine eckige Elemente angedeutet, welche die Innenwand 9 oder die innere Oberfläche bilden. Es sind weiterhin Stützstrukturelemente 8 gezeigt, welche an einem Ende Verbindungsmittel 3 aufweisen (vgl. oben).

Im rechten Teil der Figur 6 ist vereinfacht weiterhin ein Teilabschnitt 1D gezeigt.

Der Teilabschnitt 1D ist vorzugsweise derart aus dem Pulverbett additiv aufgebaut worden, dass er für den Einsatz in dem fertigen Bauteil, beispielsweise zur Bildung eines inneren Kühlkanals, mit dem Teilabschnitt 1C komplementär zusammen wirkt oder -passt (oder umgekehrt).

Der Teilabschnitt 1D weist zweckmäßigerweise zu den Verbindungsmitteln 3 des Teilabschnitts 1C komplementäre Verbindungsmittel oder -elemente (ebenfalls mit dem Bezugszeichen 3 gekennzeichnet) auf. Weiterhin weist der Teilabschnitt 1D insbesondere eine strukturierte Innenfläche oder Innenwand 9 auf, ähnlich zu der entsprechenden inneren Fläche des Teilabschnitts 1C. Der gekennzeichnete Pfeil deutet beispielsweise analog zur Figur 2 ebenfalls das Anordnen der Teilbereiche 1C, 1D zu einem Verbund 2 an.

Anhand der Figur 6 wird insbesondere der Vorteil des beschriebenen Verfahrens deutlich, wodurch die Vorteile der additiven Fertigung ausgenutzt und insbesondere deren Nachteile weitgehend umgangen werden können. Die genannten Vorteile betreffen unter anderem insbesondere die Möglichkeit, maßgeschneiderte, komplex geformte Strukturen direkt ausgehend von einer 3D-CAD-Datei aufzubauen. Es sind beispielsweise Geometrien mittels additiver Fertigung möglich, welche durch konventionelle Herstellungsverfahren nicht oder nur mit übermäßigem Aufwand herstellbar sind.

Die Erfindung ist nicht durch die Beschreibung anhand der Ausführungsbeispiele auf diese beschränkt.

## Patentansprüche

1. Verfahren zur additiven Herstellung eines Bauteils (10) umfassend die folgenden Schritte:
- additives Aufbauen einer Mehrzahl von Teilabschnitten (1) für das Bauteil (10) mit einem pulverbettbasierten Verfahren, wobei eine Mehrzahl der Teilabschnitte während des additiven Aufbauens mit komplementären Verbindungsmitteln (3) versehen werden, derart dass die Teilabschnitte (1) anschließend formschlüssig miteinander verbunden werden können, wobei die Verbindungsmittel (3) im fertigen Bauteil (10) in einem Hohlraum (14) desselben angeordnet sind oder sich durch diesen erstrecken,
- Anordnen der Teilabschnitte (1) zu einem Verbund (2), wobei nach dem oder während des Anordnens eine Mehrzahl der Teilabschnitte (1) gegenseitig fixiert werden, und
- additives Fertigstellen des Bauteils (10), wobei entlang einer Umfangsrichtung (UR) um den Verbund (2) der Teilabschnitte (1) mit einem Auftragschweiß-Verfahren Material (4) derart abgeschieden wird, dass die Teilabschnitte (1) stoffschlüssig miteinander verbunden werden.

2. Verfahren gemäß Anspruch 1, wobei der Verbund der Teilabschnitte (1) vollständig mit dem Material (4) ummantelt wird.

3. Verfahren gemäß Anspruch 1 oder 2, wobei die komplementären Verbindungsmittel (3) ausgebildet sind, über eine Feder-Nut-Verbindung (12, 13) zusammenzuwirken.

4. Verfahren gemäß einem der vorhergehenden Ansprüche, wobei mindestens einer der Teilabschnitte (1) eine Innenwand (9) des Bauteils (10) bildet.

5. Verfahren gemäß einem der vorhergehenden Ansprüche, wobei eine Mehrzahl der Teilabschnitte (1) eine Vielfach-Wandung (9, 11) des Bauteils (10) bilden.

6. Verfahren gemäß einem der vorhergehenden Ansprüche, wobei der Hohlraum (14) des Bauteils (10) mindestens einen Kühlkanal (7) umfasst.

7. Verfahren gemäß einem der vorhergehenden Ansprüche, wobei eine Mehrzahl der Teilabschnitte (1) derart aufgebaut wird, dass sie eine innere Stützstruktur (8) des Bauteils (10) bilden.

8. Verfahren gemäß einem der vorhergehenden Ansprüche, wobei mindestens einer der Teilabschnitte (1) nach dem additiven Aufbauen, beispielsweise mechanisch, nachbearbeitet wird.

9. Verfahren gemäß einem der vorhergehenden Ansprüche, wobei die Teilabschnitte (1) auf einem vorgefertigten Werkstück (20) angeordnet werden.

10. Verfahren gemäß einem der vorhergehenden Ansprüche, wobei das Bauteil (10) eine Turbinenschaufel, umfassend einen Schaufelfußabschnitt (SFA) und einen Schaufelblattabschnitt (SBA), insbesondere eine Laufschaufel für eine Gasturbine, ist.

11. Verfahren gemäß einem der Ansprüche 1 bis 9, wobei das Bauteil (1) ein Schaufelblatt (1) für eine Turbinenschaufel, insbesondere eine Laufschaufel für eine Gasturbine, ist.

12. Bauteil (10), welches mit einem Verfahren gemäß einem der vorhergehenden Ansprüche hergestellt oder herstellbar ist, umfassend einen Hohlraum (14), insbesondere umfassend mindestens einen Kühlkanal (7).

## Claims

1. Method for additive manufacturing of a component (10) comprising the following steps:
- additively building up a multiplicity of sections (1) for the component (10) by means of a powder bed-based method, wherein a multiplicity of the sections are provided with complementary connecting means (3) during the additive building up in such a way that the sections (1) can then be connected to each other in a form-fitting manner, wherein the connecting means (3), in the finished component (10), are arranged in a cavity (14) thereof or extend therethrough,
- arranging the sections (1) to form a composite (2), wherein a multiplicity of the sections (1) are mutually fixed after or during the arranging and
- additively finishing the component (10), wherein material (4) is deposited along a circumferential direction (UR) around the composite (2) of the sections (1) by means of a deposition welding method in such a way that the sections (1) are connected to each other in a substance-bonding manner.

2. Method according to Claim 1, wherein the composite of the sections (1) is completely encased by the material (4).

3. Method according to either of Claims 1 and 2, wherein the complementary connecting means (3) are designed to interact via a tongue and groove connection (12, 13).

4. Method according to one of the preceding claims, wherein at least one of the sections (1) forms an inner wall (9) of the component (10).

5. Method according to one of the preceding claims, wherein a multiplicity of the sections (1) form a multi-wall (9, 11) of the component (10).

6. Method according to one of the preceding claims, wherein the cavity (14) of the component (10) comprises at least one cooling passage (7).

7. Method according to one of the preceding claims, wherein a multiplicity of the sections (1) are built up in such a way that they form an internal support structure (8) of the component (10).

8. Method according to one of the preceding claims, wherein at least one of the sections (1) is post-processed, for example mechanically, after the additive building up.

9. Method according to one of the preceding claims, wherein the sections (1) are arranged on a prefabricated workpiece (20) .

10. Method according to one of the preceding claims, wherein the component (10) is a turbine blade, comprising a blade root portion (SFA) and blade aerofoil portion (SBA), especially a rotor blade for a gas turbine.

11. Method according to one of Claims 1 to 9, wherein the component (1) is a blade aerofoil (1) for a turbine blade, especially a rotor blade for a gas turbine.

12. Component (10), which is produced, or can be produced, by means of a method according to one of the preceding claims, comprising a cavity (14), especially comprising at least one cooling passage (7).

## Revendications

1. Procédé de fabrication additive d'une pièce (10), comprenant les stades suivants :
- on assemble additivement une pluralité de sous-parties (1) de la pièce (10) par un procédé reposant sur un lit de poudre, une pluralité de sous-parties étant pourvue pendant l'assemblage additif de moyens (3) de liaison complémentaires de manière à pouvoir ensuite relier entre elles les sous-parties (1) à complémentarité de forme, les moyens (3) de liaison étant, dans la pièce (10) finie, disposés dans une cavité (14) de celle-ci ou s'y étendant,
- on monte les sous-parties (1) en un composite (2), dans lequel, après ou pendant le montage, on immobilise mutuellement une pluralité de sous-parties (1), et
- on finit additivement la pièce (10) en déposant, suivant la direction (UR) de pourtour autour du composite (2) des sous-parties (1) du matériau (4), par un procédé de soudure avec apport, de manière à relier entre elles, à coopération de matière, les sous-parties (1).

2. Procédé suivant la revendication 1, dans lequel on enveloppe le composite des sous-parties (1) complètement du matériau (4).

3. Procédé suivant la revendication 1 ou 2, dans lequel les moyens (3) de liaison complémentaires sont constitués pour coopérer par une liaison (12, 13) par tenon et mortaise.

4. Procédé suivant l'une des revendications précédentes, dans lequel au moins l'une des sous-parties (1) forme une paroi (9) intérieure de la pièce (10).

5. Procédé suivant l'une des revendications précédentes, dans lequel une pluralité des sous-parties (1) forme des parois (9, 11) multiples de la pièce (10).

6. Procédé suivant l'une des revendications précédente, dans lequel la cavité (14) de la pièce (10) comprend au moins un conduit (7) de refroidissement.

7. Procédé suivant l'une des revendications précédentes, dans lequel on assemble une pluralité de sous-parties (1), de manière à former une structure (8) intérieure d'appui de la pièce (10).

8. Procédé suivant l'une des revendications précédentes, dans lequel on retraite, par exemple mécaniquement, au moins l'une des sous-parties (1) après l'assemblage additif.

9. Procédé suivant l'une des revendications précédentes, dans lequel on met les sous-parties (1) sur une pièce (20) préfabriquée.

10. Procédé suivant l'une des revendications précédentes, dans lequel la pièce (10) est une aube de turbine, comprenant une partie (SFA) d'emplanture d'aube et une partie (SBA) de corps d'aube, en étant notamment une aube mobile d'une turbine à gaz.

11. Procédé suivant l'une des revendications 1 à 9, dans lequel la pièce (1) est un corps (1) d'une aube de turbine, notamment d'une turbine mobile d'une turbine à gaz.

12. Pièce (10), qui est fabriquée par un procédé suivant l'une des revendications précédentes ou qui peut l'être, comprenant une cavité (14), comprenant notamment au moins un conduit (7) de refroidissement.
